# EUROPÄISCHE PATENTSCHRIFT

(11) **EP 1 900 080 B1**
(45) Veröffentlichungstag und Bekanntmachung des Hinweises auf die Patenterteilung: **28.09.2011**
(21) Anmeldenummer: 06755072.3
(22) Anmeldetag: 08.05.2006
(51) Int. Cl.: H02K 5/14

(54) **ELEKTRISCHE MASCHINE MIT EINEM BÜRSTENHALTER**
ELECTRIC MACHINE COMPRISING A BRUSH HOLDER
MACHINE ELECTRIQUE AVEC DES PORTE-BALAIS

(30) Priorität: 30.06.2005 DE 102005030955
(43) Veröffentlichungstag der Anmeldung: 19.03.2008
(73) Patentinhaber: ROBERT BOSCH GMBH, 70442 Stuttgart (DE)
(72) Erfinder: LAMPRECHT, Justus, 72144 Dusslingen (DE); SCHADOW, Joachim, 72135 Dettenhausen (DE)
(86) Internationale Anmeldenummer: PCT/EP2006/062127
(87) Internationale Veröffentlichungsnummer: WO 2007/003457

(56) Entgegenhaltungen:
- EP-A- 0 076 403
- EP-A- 1 528 656
- DE-A1- 4 038 317
- DE-A1- 10 021 362
- DE-A1- 10 342 693
- US-A- 6 005 323
- US-A1- 2004 012 283
- US-B1- 6 707 177

## Beschreibung

### Stand der Technik

Die Erfindung betrifft eine elektrische Maschine mit einem Bürstenhalter nach Gattung des unabhängigen Anspruchs.

Es sind schon zahlreiche Bürstenhalter, beispielsweise aus der DE-A-100 21362, bekannt. In dieser Schrift ist ein Schlagschrauber mit einem Außengehäuse und einem Bürstenhalter gezeigt, welcher einen kreisförmigen Haupthaltekörper umfasst an dem durch ein Befestigungselement ein Gehäuse zur Aufnahme einer Bürste angeordnet ist. Der Haupthaltekörper ist durch elastische Elemente mit dem Außengehäuse der elektrischen Maschine verbunden. In der kreisförmigen Öffnung des Haupthalteelementes ist der Kommutator angeordnet, der drehfest auf der Ankerwelle des Elektromotors der elektrischen Maschine befestigt ist und die Spulen der Ankerwicklungen zum Betrieb mit Strom versorgt. Entscheidend ist hierbei eine sichere Kontaktierung zwischen den Bürsten und dem Kommutator, die auch bei auftretenden Vibrationen des Gerätes grundsätzlich gewährleistet sein sollte.

Gemäß EP 0 076 403 A1, das eine elektrische Maschine mit den Merkmalen des Oberbegriffs des Anspruchs 1 offenbart, ist eine Bürstenhülse an einer Bürstentragplatte befestigt. Hierzu weist die Bürstenhülse an der Rückwand Laschen auf, die um entsprechende Nasen der Bürstentragplatte festklemmbar sind. Zwischen der Rückwand der Bürstenhülse und der gegenliegenden Fläche der Bürstentragplatte ist eine aus elastischem Material bestehende Dämpfungsplatte vorgesehen.

EP 1 528 656 A1, das eine elektrische Maschine mit den Merkmalen des Oberbegriffs des Anspruchs 1 offenbart, beschreibt einen Bürstenträger aus einem ersten Bürstenträgerteil, das mit einer Trägerplatte starr verbunden ist, und einem zweiten Bürstenträgerteil, das Bürsten aufnimmt und mit dem ersten Bürstenträgerteil mechanisch gekoppelt ist und mittels eines Dämpfungselements von dem ersten Bürstenträgerteil schwingungsentkoppelt ist.

Gemäß DE 100 21 362 A1 ist ein Haupthaltekörper eines Bürstenhalters elastisch innerhalb eines Gehäuses eines Schlagschraubers durch vier Gummistifte gestützt, die in dem Haupthaltekörper und in Naben des Gehäuses an dessen gegenüberliegenden Enden montiert sind.

Vorteile der Erfindung

Die erfindungsgemäße elektrische Maschine mit den Merkmalen des unabhängigen Anspruchs hat den Vorteil, dass eine sichere Kontaktierung zwischen der Bürste und dem Kommutator jederzeit gewährleistet ist. Hierzu ist das Gehäuse an einem Trägerelement befestigt, das Mittel zur elastischen Entkopplung des Gehäuses aufweist. Hieraus ergibt sich vorteilhafterweise weiterhin, dass jederzeit der maximal mögliche Strom auf den Kommutator übertragen werden kann und somit ein maximales Drehmoment am Abtrieb der Maschine zur Verfügung steht. Darüber hinaus ist eine erfindungsgemäße Ausbildung der elektrischen Maschine kostengünstig und einfach herzustellen.

Durch die in den Unteransprüchen aufgeführten Maßnahmen ergeben sich vorteilhafte Weiterbildungen und Verbesserungen der im Hauptanspruch angegebenen Merkmale.

Das Trägerelement des Bürstenhalters umfasst zumindest ein erstes und zweites Trägerteil, die durch mindestens eine Elastomerzwischenlage verbunden sind, so dass das Trägerelement auf sehr einfache und kostengünstige Weise hergestellt werden kann.

Besonders geeignet sind hierbei Materialien aus thermoplastischem Polyester für die Trägerteile, sowie Silikonkautschuk für die Eleastomerzwischenlagen.

Dadurch, dass das erste Trägerteil erste Aufnahmemittel zur Aufnahme des Befestigungselements aufweist, wird eine sichere Halterung des Gehäuses mit der Bürste am Trägerelement gewährleistet.

Weist das zweite Trägerteil ein zweites Aufnahmemittel auf, das insbesondere als im Querschnitt U-förmige Nut zur Aufnahme des ersten Trägerteils vorgesehen ist und wobei das Mittel zur elastischen Entkopplung zwischen dem ersten und dem zweiten Trägerteil angeordnet ist, ergibt sich ein besonders einfach und kostengünstig zu fertigendes Teil.

Hierbei ist es von besonderem Vorteil, wenn zumindest eines der Aufnahmemittel als im Wesentlichen keilförmige Nut ausgebildet ist, da hierdurch eine genaue Führung der Bürste trotz der elastischen Entkopplung gewährleistet ist.

Sind mehrere Trägerelemente vorgesehen, so ergibt sich eine elastische Entkopplung jeder einzelnen Bürste, wodurch die Kontaktierung der Bürsten noch weiter verbessert wird.

Ein besonders guter Halt für das Gehäuse ergibt sich, wenn das Befestigungselement im Wesentlichen T-förmig ausgebildet ist. Kostengünstig lässt sich das Befestigungselement einstückig mit dem Gehäuse, insbesondere aus Blech ausbilden.

Zur optimalen Kontaktierung der Bürste mit dem Kommutator ist es besonders vorteilhaft, wenn ein Vorspannelement, insbesondere eine Feder vorgesehen ist, die am Befestigungselement befestigt ist und die Bürste mit einer Vorspannkraft beaufschlagt.

Hierbei ist es von besonderem Vorteil, wenn das Vorspannelement im Wesentlichen außerhalb des Gehäuses angeordnet ist.

Die erfindungsgemäße elektrische Maschine weist eine lange Lebensdauer auf, da die elastische Entkopplung die Lebensdauer der Bürsten erhöht sowie eine optimale Kommutierung der Bürsten mit dem Kommutator gewährleistet. Darüber hinaus ergibt sich eine Aufruhe des Motors während des Betriebs.

### Zeichnungen

Ein Ausführungsbeispiel der Erfindung ist in den Zeichnungen dargestellt und in der nachfolgenden Beschreibung näher erläutert. Es zeigen:
Figur 1 einen erfindungsgemäßen Bürstenhalter in einer perspektivischen Darstellung und
Figur 2 den erfindungsgemäßen Bürstenhalter in eingebautem Zustand in einer elektrischen Maschine.

### Beschreibung des Ausführungsbeispiels

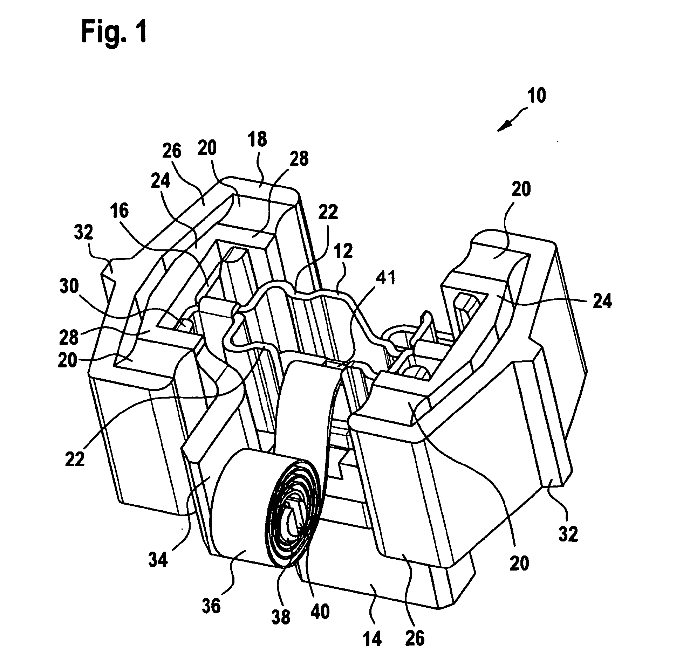

In Figur 1 ist ein erfindungsgemäßer Bürstenhalter 10 in einer perspektivischen Darstellung gezeigt. Dieser umfasst ein Gehäuse 12, in dem eine Bürste 14 aufgenommen ist. Am Gehäuse 12 ist ein Befestigungselement 16 angeordnet, um das Gehäuse 12 an einem Trägerelement 18 zu befestigen. Das Trägerelement 18 weist Mittel 20 auf, die das Gehäuse 12 elastisch entkoppeln. Das Gehäuse 12 ist aus Blech hergestellt, insbesondere in einem Stanz-Biege-Verfahren, und einstückig mit dem Befestigungselement 16 ausgebildet. Das Gehäuse 12 ist von im Wesentlichen quaderförmiger Gestalt, so dass die Bürste 14 darin sicher aufgenommen werden kann. Vorteilhaft ist es hier, wenn die Quaderform des Gehäuses 12 etwas größer ist, als die Quaderform der Bürste 14 und entlang der Längserstreckung des Gehäuses Eindrückungen 22 vorgesehen sind, so dass die Bürste 14 schienenartig auf den Eindrückungen 22 geführt ist. Das

Befestigungselement 16 ist hierbei im Wesentlichen im Querschnitt T-förmig ausgebildet, so dass das Gehäuse 12 bezüglich der Längsachse der Bürste 14 beweglich ist.

Das Trägerelement 18 umfasst im Wesentlichen ein erstes Trägerteil 24 sowie ein zweites Trägerteil 26 die durch eine Eleastomerzwischenlage als Mittel 20 zur elastischen Entkopplung verbunden sind. Dadurch wird das Befestigungselement 16 und das die Bürste 14 tragende Gehäuse 12 elastisch entkoppelt. Das erste Trägerteil 24 weist hierbei eine im Wesentlichen u-förmige Gestalt auf, wodurch zwei Schenkel 28 gebildet sind, so daß sich ein erstes Aufnahmemittel 25 als inneres des u-förmigen Trägerteils 24 ergibt. Der Abstand dieser beiden Schenkel 28 ist wenig größer, als die Breite des T-förmigen Befestigungselementes 16, so dass das T-förmige Befestigungselement 16 zwischen den beiden Schenkeln 28 des ersten Trägerteil 24 geführt ist. Damit das Befestigungselement 16 aus dem ersten Trägerteil 24 nicht herausrutscht, ist an den Schenkeln 28 jeweils eine Führungsschiene 30 angeordnet, die sich im Querschnitt in das Innere des u-förmigen Bereichs erstreckt. Die Lateralflanken des T-förmigen Befestigungselements 16 sind damit zwischen der Basis und den Führungsschienen 30 des ersten Trägerteils beweglich gehaltert. In einer Variation kann das Befestigungselement 16 auch in anderer Weise am ersten Trägerteil 24 befestigt sein.

Das zweite Trägerteil 26 weist ebenfalls eine im Wesentlichen im Querschnitt u-förmige Gestalt auf, die das erste Trägerteil 24 in einem zweiten Aufnahmemittel 27 aufnimmt. Das Aufnahmemittel 27 ist wiederum der durch die u-förmige Ausbildung gebildete Zwischenraum zwischen den Schenkeln. Zwischen dem ersten Trägerteil 24 und dem zweiten Trägerteil 26 ist eine Eleastomerzwischenlage als Mittel 20, vorgesehen, die insbesondere aus Silikonkautschuk ausgebildet ist, so dass das erste Trägerteil 24 und das zweite Trägerteil 26 elastisch voneinander entkoppelt sind.

Am zweiten Trägerteil 26 sind darüber hinaus Haltemittel 32 angeordnet, die zur Halterung des Bürstenhalters 10 an der elektrischen Maschine dienen.

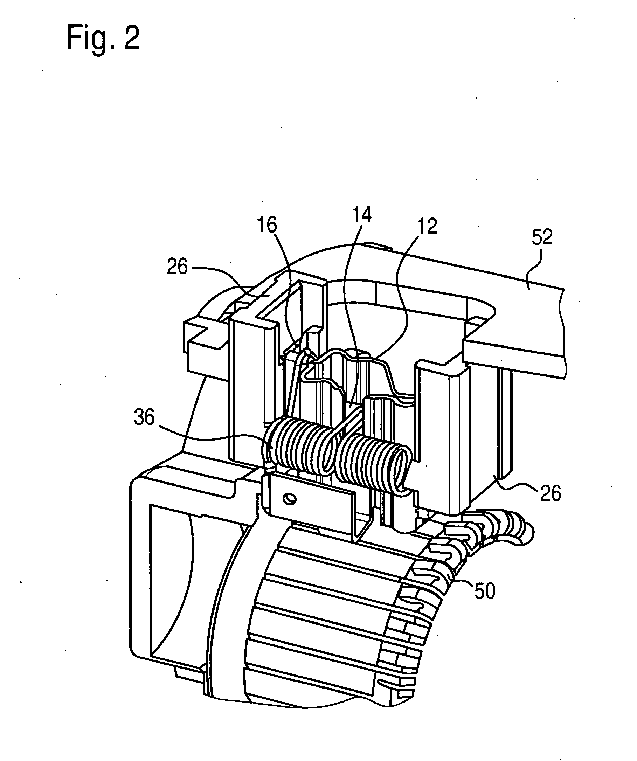

Um eine sichere Kontaktierung der Bürste 14 mit dem Kommutator 50 (Figur 2) zu gewährleisten, ist am ersten Trägerteil 24 ein Federhalter 34 angeformt, der eine Feder 36 als Vorspannelement trägt, die derart ausgebildet ist, dass die Bürste 14 immer in Richtung des Kommutators 50 gedrückt wird. Hierzu ist die Feder 36 als Spiralfeder ausgebildet, die auf einem Zapfen 38 getragen wird. Die Spiralfeder weist hierbei typischerweise zwei Enden auf, wobei das erste Ende in einer Nut 40 des Zapfens 38 eingehakt ist und das zweite Ende auf die Bürste 14 oder das Gehäuse 12 drückt. Das Gehäuse 12 weist hierzu aus im Bereich der Feder 36 einen Einschnitt 41 auf, der zur Durchführung der Feder 36 dient. Auf diese Weise kann die Feder 36 direkt mit der Bürste 14 kontaktiert werden und das erste Tragelement 24 fest mit dem Befestigungselement 16 verbunden sein.

Idealerweise sind am Gehäuse 12 mehrere Befestigungselemente 16 vorgesehen, die entsprechend mit mehreren Trägerelementen 18 korrespondieren und ähnlich oder gleich ausgebildet sind, wie die oben beschriebene.

In einer Variation der Erfindung können natürlich verschiedenste Arten von Federn, wie Zugfedern, Druckfedern oder Blattfedern verwendet werden. Darüber hinaus kann der Federhalter 34 auch am zweiten Trägerteil 26 oder an einem anderen feststehenden Teil der elektrischen Maschine angeordnet sein. Die Trägerteile 24, 26 sind aus einem thermoplastischem Polyester, insbesondere PBT ausgebildet. Diese sind daher einfach in einem Spritzgussverfahren zu fertigen. In einer weiteren Ausführungsform der Erfindung kann das Mittel 20 zur elastischen Entkopplung auch lediglich zwischen den beiden Schenkeln des im Wesentlichen u-förmigen Trägerteils 24 bzw. des zweiten Trägerteil es 26 angeordnet sein. Hierbei kann die Basis des ersten Trägerteils 24 auch Führungselemente aufweisen, die mit weiteren Elementen des zweiten Trägerteils 26 korrespondieren, so dass die beiden Trägerteile 24, 26 in einer Richtung geführt sind. Da die Belastung an der Bürste 14 im Regelfall senkrecht zur Längserstreckung der Bürste erfolgt, kann durch eine derartige Führung eine verbesserte Steifigkeit erreicht werden, ohne auf die Vorteile der elastischen Entkopplung zu verzichten.

In Figur 2 ist der Bürstenhalter 10 in einer erfindungsgemäßen elektrischen Maschine in einer Ausschnittsdarstellung gezeigt. Die elektrische Maschine weist ein Maschinengehäuse 52 auf, an der das zweite Trägerteil 26, bzw. die beiden zweiten Trägerteil 26 befestigt sind. Der Bürstenhalter 10 ist hierbei so am Gehäuse 52 der elektrischen Maschine befestigt, dass die Bürste 14 axial auf den Kommutator 50 durch die Feder 36 gedrückt wird. Auf diese Weise ist ständig für einen guten Kontakt zwischen Bürste 14 und Kommutator 50 gesorgt. In einer weiteren Variante der Erfindung, kann die Bürste 14 bzw. der Bürstenhalter 10 auch schräg, das heißt in einer senkrecht zur Achsrichtung des Kommutators 50 liegenden Ebene angeordnet werden. Typischer Weise sollte dies derart erfolgen, dass bei einem rechtsdrehenden Kommutator 50 der Bürstenhalter 10 oder die Bürste 14 nach links gedreht ist oder umgekehrt. Dadurch kann die Kontaktierung der Bürste 14 mit dem Kommutator 50 verbessert werden und es ergibt sich ein flacherer Berührungswinkel zwischen der Oberfläche des Kommutators 50 und der den Kommutator 50 berührenden Fläche der Bürste 14.

Das Maschinengehäuse 52 ist typischer Weise ein Elektromotor für eine Handwerkzeugmaschine, einen elektrischen Scheibenwischer für ein Kraftfahrzeug oder ein elektrischer Fensterheber für ein Kraftfahrzeug, kann aber auch der Poltopf eines Elektromotors sein.

Zweckmäßiger Weise ist das Mittel 20 mit dem ersten Trägerteil 24 und dem zweiten Trägerteil 26 in einem mehrkomponentigen Spritzgussverfahren quasi einstückig ausgebildet. Ebenso ist es möglich, das erste und zweite Trägerteil 24, 26 in einem zwei- oder mehrkomponenten Spritzgussverfahren zusammen mit dem Mittel 20 zu spritzen und das jeweils andere Trägerteil 24 bzw. 26 einzukleben oder anderweitig zu befestigen. Hierzu können beispielsweise am ersten Trägerteil 24 oder zweiten Trägerteil 26 Noppen angeformt sein, die mit Aussparungen im Mittel 20 korrespondieren und daher in die Aussparungen im Mittel 20 eingreifen oder umgekehrt. In einer weiteren Form kann dies natürlich auch für beide Tragelemente derart vorgesehen sein.

Das Gehäuse 12 mit den Befestigungselementen 16 kann auch einstückig aus Kunststoff ausgebildet sein. In einer weiteren Ausbildung kann auch das Befestigungselement 16, das Gehäuse 12 und die Bürste 14 einstückig aus einem entsprechend geeignetem Material ausgebildet werden. Ebenso ist es möglich, anstatt der Feder 36 einen entsprechenden Kunststoffbügel vorzusehen, der die Bürste 14 in Richtung des Kommutators 50 drückt. Dieser Bügel kann dann insbesondere einstückig am ersten oder zweiten Trägerteil 24, 26 ausgebildet werden. Darüber hinaus kann sowohl eine Feder wie auch ein entsprechender Kunststoffbügel anstatt an einem der Trägerteile 24, 26 auch am Gehäuse 12, am Befestigungselement 16 oder am Maschinengehäuse 52 angreifen.

## Patentansprüche

1. Elektrische Maschine mit einem Maschinengehäuse (52), mit einem Trägerelement (18), mit einem Bürstenhalter (10), umfassend ein Gehäuse (12) zur Aufnahme einer Bürste (14) und ein am Gehäuse (12) angeordnetes Befestigungselement (16), um das Gehäuse (12) an dem Trägerelement (18) zu befestigen, wobei das Trägerelement (18) Mittel (20) zur elastischen Entkopplung des Gehäuses (12) aufweist, **dadurch gekennzeichnet, dass** das Trägerelement (18) zumindest ein erstes und ein zweites Trägerteil (24, 26) umfasst, die durch mindestens eine Elastomerzwischenlage als Mittel (20) zur elastischen Entkopplung verbunden sind, wobei das zweite Trägerteil (26) am Maschinengehäuse (52) befestigt ist und das erste Trägerteil (24) erste Aufnahmemittel (25) aufweist, die das Befesfigungselement (16) aufnehmen.

2. Elektrische Maschine nach Anspruch 1, **dadurch gekennzeichnet, dass** zumindest eines der Trägerteile (24, 26) aus thermoplastischem Polyester, insbesondere PBT besteht und/oder mindestens eine der Elastomerzwischenlagen (20) zumindest teilweise aus Silikonkautschuk besteht.

3. Elektrische Maschine nach einem der Ansprüche 1 oder 2, **dadurch gekennzeichnet, dass** das zweite Trägerteil (26) zweite Aufnahmemittel (27) zur Aufnahme des ersten Trägerteils (24) aufweist.

4. Elektrische Maschine nach einem der vorhergehenden Ansprüche, **dadurch gekennzeichnet, dass** zumindest eines der Aufnahmemittel (25, 27) als im wesentlichen keilförmige Nut ausgebildet ist.

5. Elektrische Maschine nach einem der vorhergehenden Ansprüche, **dadurch gekennzeichnet, dass** mehrere, insbesondere zwei oder vier, Trägerelemente (18) vorgesehen sind, die insbesondere jeweils gegenüberliegend angeordnet sind.

6. Elektrische Maschine nach Anspruch 5, **dadurch gekennzeichnet, dass** mehrere, zu den Trägerelementen (18) korrespondierende Befestigungselemente (16) vorgesehen sind.

7. Elektrische Maschine nach einem der vorhergehenden Ansprüche, **dadurch gekennzeichnet, dass** das Befestigungselement (16) im wesentlichen T-förmig ausgebildet ist.

8. Elektrische Maschine nach einem der vorhergehenden Ansprüche, **dadurch gekennzeichnet, dass** das Befestigungselement (16) einstückig mit dem Gehäuse (12) ausgebildet ist.

9. Elektrische Maschine nach einem der vorhergehenden Ansprüche, **dadurch gekennzeichnet, dass** ein Vorspannelement (36), insbesondere eine Feder, vorgesehen ist, das am Befestigungselement (18) befestigt ist und die Bürste (14) mit einer Vorspannkraft beaufschlagt.

10. Elektrische Maschine nach Anspruch 9, **dadurch gekennzeichnet, dass** das Vorspannelement (36) im wesentlichen außerhalb des Gehäuses (12) angeordnet ist.

## Claims

1. Electric machine with a machine housing (52), with a carrier element (18), with a brush holder (10), comprising a housing (12) for accommodating a brush (14) and a fastening element (16) arranged on the housing (12) for fastening the housing (12) to the carrier element (18), the carrier element (18) having means (20) for elastically decoupling the housing (12), **characterized in that** the carrier element (18) comprises at least one first and one second carrier part (24, 26), which are connected by at least one elastomeric interlayer as means (20) for elastic decoupling, the second carrier part (26) being fastened on the machine housing (52), and the first carrier part (24) having first accommodating means (25) which accommodate the fastening element (16).

2. Electric machine according to Claim 1, **characterized in that** at least one of the carrier parts (24, 26) consists of thermoplastic polyester, in particular PBT and/or at least one of the elastomeric interlayers (20) consists at least partially of silicone rubber.

3. Electric machine according to either of Claims 1 and 2, **characterized in that** the second carrier part (26) has second accommodating means (27) for accommodating the first carrier part (24).

4. Electric machine according to one of the preceding claims, **characterized in that** at least one of the accommodating means (25, 27) is in the form of a substantially wedge-shaped groove.

5. Electric machine according to one of the preceding claims, **characterized in that** a plurality of, in particular two or four, carrier elements (18) are provided, which are in particular arranged in each case opposite one another.

6. Electric machine according to Claim 5, **characterized in that** a plurality of fastening elements (16) corresponding to the carrier elements (18) are provided.

7. Electric machine according to one of the preceding claims, **characterized in that** the fastening element (16) is substantially in the form of a T.

8. Electric machine according to one of the preceding claims, **characterized in that** the fastening element (16) is formed integrally with the housing (12).

9. Electric machine according to one of the preceding claims, **characterized in that** a pretensioning element (36), in particular a spring, is provided, which is fastened to the fastening element (18) and applies a pretensioning force to the brush (14).

10. Electric machine according to Claim 9, **characterized in that** the pretensioning element (36) is arranged substantially outside the housing (12).

## Revendications

1. Machine électrique avec un carter de machine (52), équipé d'un élément de support (18), d'un porte-balais (10), comprenant un carter (12) prévu pour accueillir un balai (14) et un élément de fixation (16) disposé au niveau du carter (12), pour fixer le carter (12) à l'élément de support (18), l'élément de support (18) comportant des moyens (20) pour le découplage élastique du carter (12), **caractérisée en ce que** l'élément de support (18) comprend au moins une première et une deuxième partie de support (24, 26) reliées par le biais d'au moins une position intermédiaire en élastomère servant de moyens (20) pour le découplage élastique, la deuxième partie de support (26) étant fixée au carter de machine (52) et la première partie de support (24) présentant des premiers moyens de logement (25) logeant l'élément de fixation (16).

2. Machine électrique selon la revendication 1, **caractérisée en ce qu'**au moins une des parties de support (24, 26) est en polyester thermoplastique, notamment en PBT et/ou qu'au moins une des positions intermédiaires en élastomère (20) est au moins en partie en caoutchouc siliconé.

3. Machine électrique selon l'une quelconque des revendications 1 ou 2, **caractérisée en ce que** la deuxième partie de support (26) comporte des deuxièmes moyens de logement (27) servant à loger la première partie de support (24).

4. Machine électrique selon l'une quelconque des revendications précédentes, **caractérisée en ce qu'**au moins un des moyens de logement (25, 27) prend pour l'essentiel la forme d'une rainure en forme de clavette.

5. Machine électrique selon l'une quelconque des revendications précédentes, **caractérisée en ce que** plusieurs, notamment deux ou quatre, éléments de support (18) sont prévus et sont notamment respectivement disposés de façon opposée.

6. Machine électrique selon la revendication 5, **caractérisée en ce que** plusieurs éléments de fixation (16) correspondant aux éléments de support (18) sont prévus.

7. Machine électrique selon l'une quelconque des revendications précédentes, **caractérisée en ce que** l'élément de fixation (16) est réalisé pour l'essentiel en forme de T.

8. Machine électrique selon l'une quelconque des revendications précédentes, **caractérisée en ce que** l'élément de fixation (16) est réalisé d'un seul tenant avec le carter (12).

9. Machine électrique selon l'une quelconque des revendications précédentes, **caractérisée en ce qu'**un élément de précontrainte (36), notamment un ressort, est prévu, qui est fixé à l'élément de fixation (18) et sollicite le balai (14) au moyen d'une force de précontrainte.

10. Machine électrique selon la revendication 9, **caractérisée en ce que** l'élément de précontrainte (36) est disposé pour l'essentiel à l'extérieur du carter (12).
